# EUROPEAN PATENT APPLICATION

(11) **EP 0 974 385 A1**
(43) Date of publication of application: **26.01.2000**
(21) Application number: 99114512.9
(22) Date of filing: 23.07.1999
(51) Int. Cl.: B01D 1/18, F26B 3/088, F26B 3/092, F26B 3/08, F26B 3/084, B01J 8/44

(54) **Method and device for drying solid suspensions or dissolved solid**

(30) Priority: 24.07.1998 JP 22526298
(71) Applicant: Nara Machinery Co., Ltd., Ohta-ku Tokyo (JP)
(72) Inventor: Ohmura, Yukimasa, c/o Nara Machinery Co., Ltd., Tokyo (JP); Ono, Kenji, c/o Nara Machinery Co., Ltd., Tokyo (JP)
(74) Representative: Fiener, Josef

(57) **Abstract**

To provide a liquid material drying method whereby powder of a desired water content can be obtained directly by means of a single drying apparatus. A liquid material drying method whereby a large amount of medium particles (6) are placed on a dispersion plate (9) inside a drying vessel (4), the medium particles (6) are fluidized by means of heated gas blown up through said dispersion plate (9), and supplied liquid material (M) is dried by being caused to adhere to the surfaces of the medium particles (6), the solid component contained in the liquid material being collected continuously in the form of powder, wherein a whirling upward airflow caused by the heated gas is formed, at the least, in the region of the drying vessel (4) above the fluidized layer of medium particles (6), the solid component in the liquid material having detached from the surfaces of the aforementioned medium particles being caused to disperse, float and dry further in this whirling upward airflow.

## Description

### TECHNICAL FIELD

The present invention relates to a liquid material drying method and a liquid material drying apparatus, and more particularly, to a liquid material drying method and a liquid material drying apparatus whereby a liquid material is dried by being caused to adhere to the surfaces of particles of a medium held in a fluidized state by means of heated gas, the solid component contained in the liquid material being collected continuously in the form of powder.

### BACKGROUND ART

Conventional drying methods for drying a liquid material and obtaining dried powder directly with good efficiency are disclosed in Japanese Patent Laid-open No. (Sho) 63-232801, Japanese Utility Model Laid-open No. (Hei) 2-61401, and Japanese Patent Laid-open No. (Hei) 8-141301.

These methods for drying liquid materials can broadly be described as follows.

Firstly, a large amount of medium particles are placed on a dispersion plate in a drying vessel, whereupon the particles are fluidized by means of heated gas blown up through the aforementioned dispersion plate. Liquid material (generally called "slurry" when a fine-grain material is suspended in water or another dispersion medium, or "solution" when a material is dissolved in water or another solvent, but in this patent referred to generally as "liquid material") is supplied to the drying vessel containing these medium particles in a fluidized state. Thereupon, the liquid material adheres to the surfaces of the individual medium particles, and the dispersion medium or solvent is evaporated rapidly by the heated gas, thereby drying the material. The solid material remaining on the surfaces of the medium particles then detaches from the surfaces of the particles by means of collisions and friction between medium particles or between the particles and the inner walls of the drying vessel, and it is collected in the form of dried fine particles.

However, the dried particles obtained by the foregoing method are not sufficiently dry and they generally have a high moisture content.

This is because, in the conventional methods described above, the solid material detached from the surface of the medium particles progressively floats up in a continuous fashion from the fluidized layer of medium particles into an upper space, where it mixes together with exhaust gas rising up almost directly through the fluidized layer (this exhaust gas being a low-temperature, high-humidity gas which has lost its heat and incorporated a large amount of the evaporated dispersion medium or solvent whilst passing through the fluidized layer of medium particles).

Therefore, problems have arisen in that liquid material dried by the aforementioned method must undergo further drying for finishing (involving a separate drier in a subsequent process) in order to obtain a powder of the desired low moisture content.

The present invention was devised in view of the problems associated with the conventional liquid material drying method and liquid material drying apparatus described above, an object thereof being to provide a liquid material drying method and a liquid material drying apparatus whereby powder of a desired moisture content can be obtained directly by means of a single drying apparatus.

### DISCLOSURE OF THE INVENTION

In order to achieve the aforementioned object, the present invention is a liquid material drying method whereby a large amount of medium particles are placed on a dispersion plate inside a drying vessel, the medium particles are fluidized by means of heated gas blown up through the aforementioned dispersion plate, and liquid material supplied to the vessel is dried by adhering to the surfaces of the medium particles, the solid component contained in the liquid material being collected continuously in the form of powder, characterized in that a whirling upward airflow caused by the heated gas is formed, at the least, in the region of the drying vessel above the fluidized layer of medium particles, the solid component in the liquid material having detached from the surfaces of the aforementioned medium particles being caused to disperse and float and dry further in this whirling upward airflow.

The present invention is also a drying apparatus comprising a drying vessel divided by a dispersion plate into a hot air chamber and a fluidization chamber, a heated gas inlet pipe connected to the hot air chamber of the drying vessel, a large amount of medium particles contained in the fluidization chamber of the drying vessel, and a liquid material supply pipe for supplying liquid material to be dried to the fluidization chamber containing the medium particles, characterized in that a rotating mechanism for creating a whirling upward airflow of the heated gas inside the drying vessel is provided, at the least, above the fluidized layer of medium particles in the aforementioned drying vessel. According to the liquid material drying method and the liquid material drying apparatus relating to the present invention, the following actions and merits are obtained.

Firstly, according to the liquid material drying method and liquid material drying apparatus relating to the present invention, since the solid component in the liquid material having detached from the surfaces of the medium particles remains rotating inside the same drying vessel, and the frequency of contact of this solid component with fresh heated gas can be raised dramatically, it is possible to dry powder to a greater degree than in a conventional liquid material drying method and liquid material drying apparatus.

Moreover, according to the liquid material drying method and liquid material drying apparatus relating to the present invention, it is also possible readily to control the water content of the collected powder by altering the flow speed, and the like, of the whirling upward airflow of heated gas created inside the drying vessel.

Here, desirably, the whirling upward airflow is created inside the drying vessel by means of fresh heated air being injected into the drying vessel in a fixed direction to the tangential direction of the sidewalls of the vessel, from the whole circumference of the side wall of the drying vessel in the region above the fluidized layer of medium particles.

Moreover, desirably, the composition for implementing this method of creating a whirling upward airflow is constituted by forming the whole circumference of the side wall of the drying vessel in the region above the fluidized layer of medium particles by means of a porous plate, wherein a plurality of blowholes are formed in an arrangement such that the openings thereof face in one tangential direction of the sidewalls, the region of the porous plate being covered by a vessel, and a heated gas inlet pipe being connected to this vessel also.

This is because the whirling upward airflow created inside the drying vessel in this way serves to prevent adhesion and accumulation of powder on the sidewalls of the drying vessel immediately after it has become detached from the surfaces of the medium particles. In other words, since the whirling upward airflow imparts a centrifugal force to the powder, in many cases, powder which is insufficiently dried immediately after becoming detached from the surfaces of the medium particles, is pressed against the inner sidewalls of the drying vessel, and adheres to, and accumulates on, these sidewalls. By injecting fresh heated gas into the drying vessel in a fixed direction to the tangential direction of the sidewalls, from the whole circumference of the side wall of the drying vessel in the region above the fluidized layer of medium particles where this adhesion and accumulation of powder is a concern, a whirling upward airflow is created inside the drying vessel, imparting rotational movement to the powder, and furthermore, a so-called "air curtain" is formed by the heated gas in the vicinity of the sidewalls of the drying vessel. This air curtain prevents direct contact of the powder onto the sidewalls of the drying vessel, thereby preventing adhesion and accumulation of the powder. Moreover, the whirling upward airflow created inside the drying vessel also has the effect of causing powder which has received insufficient drying to remain in a rotating state for a long period of time, without rising upwards. In other words, the heated gas emitted from the whole circumference of the sidewalls of the drying vessel in the region above the fluidized layer of medium particles forms a high-speed whirling airflow having a certain width towards the centre of the vessel from the side wall thereof, or a so-called "air ring", in that region. This "air ring" has the effect of causing powder that has been insufficiently dried to remain in a rotating state, rather than rising upwards, thereby promoting drying of the powder.

Moreover, desirably, in the method for creating a whirling upward airflow inside the drying vessel according to the present invention, in addition to the steps in the aforementioned method, a dividing plate is provided in a position above the fluidized layer of medium particles and below the side wall emitting said fresh heated gas, and exhaust gas rising up through the fluidized layer of medium particles and out from this dividing plate is emitted in the same direction as the rotational direction of the whirling upward airflow created inside the drying vessel by the injection of said fresh heated gas.

This is desirable because, if the exhaust gas is caused to rotate by providing the dividing plate, a centrifugal force can be imparted to the powder mixed in with this exhaust gas, and this powder is caused to remain in the aforementioned air ring section of fresh heated gas, circulating along the inner walls of the drying vessel, and hence achieving highly efficient contact between the powder and the fresh heated gas. This is also desirable because the dividing plate provided above the fluidized layer of medium particles has the effect of preventing the medium particles from being scattered by turbulence.

Moreover, this is not desirable because, if there is no dividing plate, or if there is a dividing plate but it is not capable of causing the exhaust gas to rotate, then the powder rising up with the exhaust gas is liable to pass through the openings in the centre thereof, without remaining in the aforementioned air ring section, and hence drying by means of the fresh heated air is difficult to achieve.

### BRIEF DESCRIPTION OF THE DRAWINGS

Fig. 1 is a conceptual diagram of a apparatus relating to a first embodiment of the present invention, and peripheral apparatus provided before and after same;
Fig. 2 is an enlarged sectional diagram of a portion of Fig. 1 along line X - X;
Fig. 3 is a plan view showing a further example of a partition plate used in the apparatus according to the present invention;
Fig. 4 is a plan view showing a further example of a partition plate used in the apparatus according to the present invention;
Fig. 5 is a plan view showing a further example of a partition plate used in the apparatus according to the present invention;
Fig. 6 is an enlarged sectional view of a partition plate used in the apparatus according to the present invention;
Fig. 7 is an enlarged sectional view of a further example of a partition plate used in the apparatus according to the present invention; and
Fig. 8 is a conceptual diagram showing a apparatus relating to a second embodiment of the present invention, and peripheral apparatus provided before and after same.

### BEST MODE FOR CARRYING OUT THE INVENTION

Below, embodiments of the present invention are described in detail with reference to the drawings.

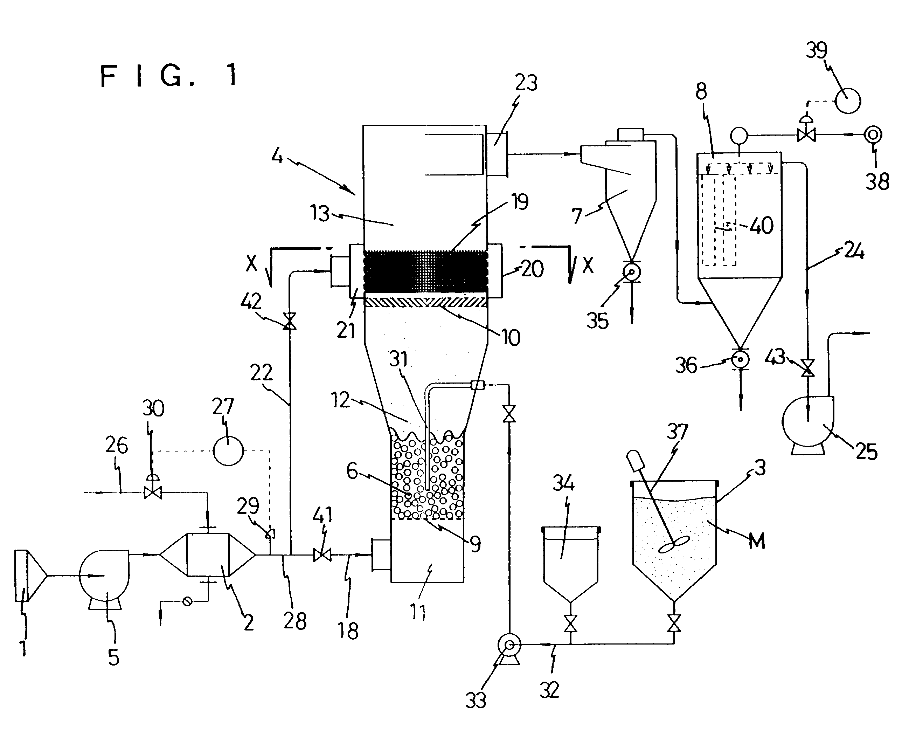

Firstly, Fig. 1 is a conceptual diagram of a drying apparatus relating to a first embodiment of the present invention, and peripheral apparatus for same.

In this diagram, 1 is an air filter and 2 is an air heater for heating air which has been purified by the air filter 1. 3 is a raw material tank for storing liquid material M which is to be dried.

4 is a drying vessel for drying liquid material M supplied from the aforementioned raw material tank 3. Air purified by the air filter 1 and heated by the air heater 2 is introduced into the drying vessel 4 by the ventilating action of a supply blower 5. The medium particles 6 onto which the liquid material M has dispersed and adhered are fluidized, thereby drying the liquid material M, and solid component of the liquid material M detaching from the surfaces of the medium particles 6 are further dried to the desired moisture content in the whirling upward airflow generated inside the drying vessel 4. The dried solid is then transferred to a cyclone 7 and a bag collector 8, whereupon it is ultimately collected as a dried powder.

The aforementioned drying vessel 4 is an approximately cylindrical vessel which expands slightly towards the upper portion thereof, as illustrated in the drawing. The vessel 4 is divided by the dispersion plate 9 and a partition plate 10 into three regions: a hot air chamber 11 located in the bottom portion of the vessel, a fluidization chamber 12 located above the hot air chamber 11, and a rotational drying chamber 13 located in the upper portion of the vessel.

The dispersion plate 9 dividing the hot air chamber 11 and the fluidization chamber 12 is formed by a porous plate. The aforementioned large amount of medium particles 6 contained in the fluidization chamber 12 is transformed to a fluidized state by means of heated air blown up through the porous dispersion plate 9.

This dispersion plate 9 is not necessarily limited to the porous plate structure described above, provided that it is capable of dispersing the heated air blown up from the hot air chamber 11 below, in an efficient manner.

Moreover, the aforementioned partition plate 10 in the upper portion of the vessel contains a plurality of blowholes 14 whereby exhaust gas flowing into the rotational drying chamber 13 from the fluidization chamber 12 via the partition plate 10 is formed into a whirling upward airflow.

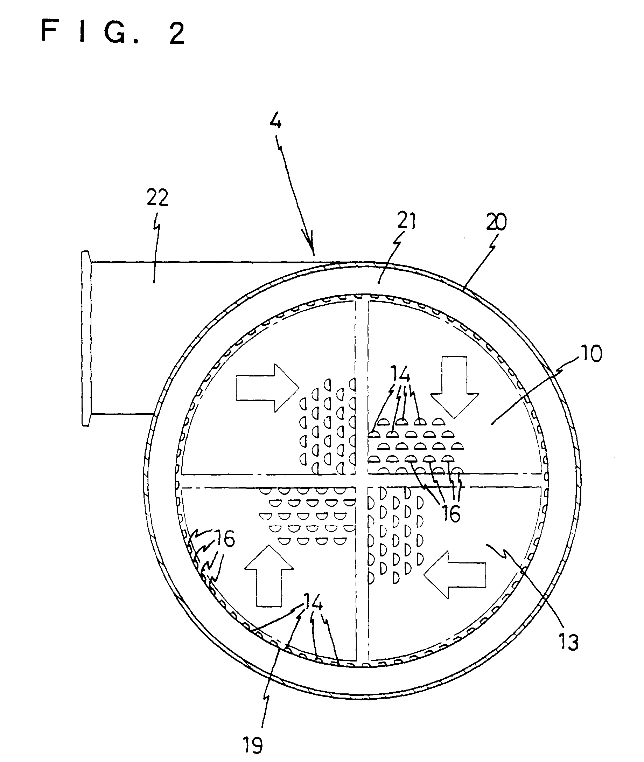

The shape of these respective blowholes 14 in the partition plate 10 is such that, as illustrated in Fig. 6, for example, a hole 15 is covered in the region above the hole 15 by a roof -shaped projection 17 in such a manner that the opening 16 of the hole 15 faces to one side in an approximately parallel direction to the surface of the plate. Moreover, as illustrated in Fig. 2, a plurality of blowholes 14 having this shape are arranged in quadrant regions of a circle, in such a fashion that their respective openings 16 face similarly in the approximate direction of the circumference of a circle that is concentric to the drying vessel 4 (directions indicated by arrows in the diagram), there being a 90° angle between the directions of the openings 16 in adjacent quadrants in the circumferential direction.

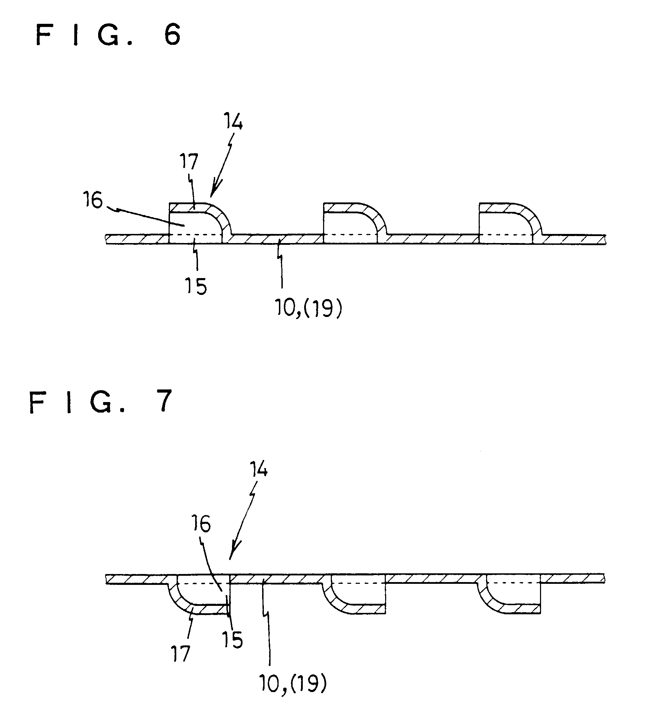

The blowholes 14 in the aforementioned partition plate 10 may also be formed such that the roof-shaped projections 17 extend in a downward direction, as illustrated in Fig. 7. Moreover, the blowholes may also be formed as long "slit"-shaped holes. Furthermore, the arrangement of the blowholes 14 may be such the divided regions within which the openings 16 face in a similar direction are represented by smaller regions than those illustrated in Fig. 2. Yet further, the arrangement of the aforementioned blowholes 14 may be such that the openings 16 of the individual blowholes 14 face approximately perpendicularly to the radial direction, as illustrated in

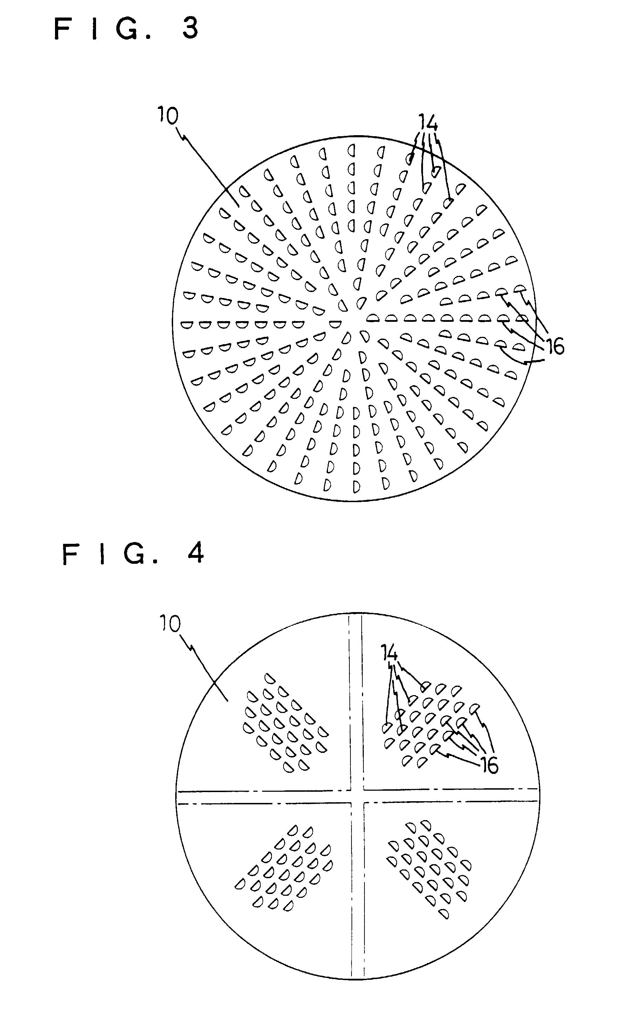

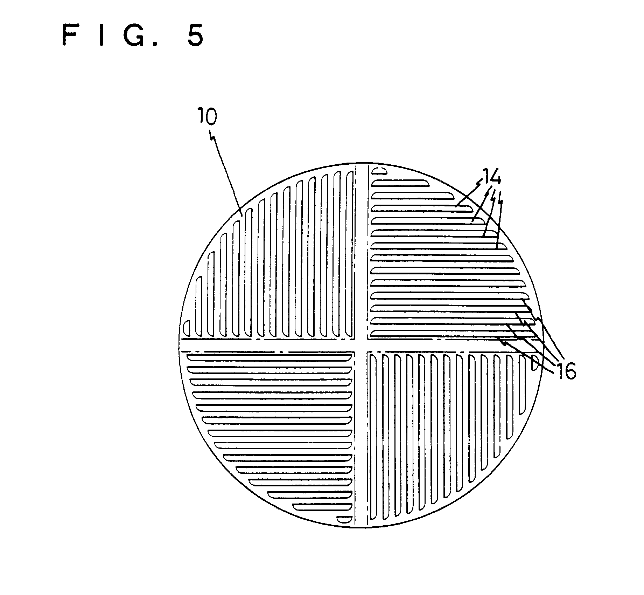

Fig. 3 or Fig. 4. The arrangement of the blowholes 14 may also be such that long "slit"-shaped blowholes 14 are provided, as illustrated in Fig. 5.

Desirably, the openings 16 of the blowholes 14 formed in the aforementioned partition plate 10 are smaller than the diameter of the medium particles 6. This is in order to prevent completely any dispersion of medium particles 6 by passing through the partition plate 10. However, depending on the material being processed, powder may adhere to the openings 16, causing them to clog up, in which case the aforementioned condition does not necessarily apply.

A heated gas inlet pipe 18 is connected to the side wall (or bottom face) of the hot air chamber demarcated in the lower portion of the drying vessel 4 by means of the dispersion plate 9. Air which has been purified by the aforementioned air filter 1 and heated by the aforementioned air heater 2 as illustrated in Fig. 1 is supplied via this inlet pipe 18, by means of the ventilating action of the aforementioned supply blower 5.

Moreover, the whole circumference of a certain width of the inner wall of the rotating drying chamber 13 located directly above the aforementioned partition plate 10 is constituted by a porous plate 19 wherein blowholes 14 similar to those shown in Fig. 6 (or Fig. 7) are formed (these blowholes 14 may also be long "slit"-shaped blowholes, similarly to the blowholes 14 in the partition plate described above). Moreover, the blowholes 14 of this porous plate 19 are arranged in such a manner that their openings 16 face regularly in the tangential direction of the vessel 4. Therefore, heated gas supplied to the rotational drying chamber 13 via this porous plate 19 forms a virtually horizontal rotating airflow, in the same direction of the rotating airflow generated in the rotational drying chamber 13 by means of the aforementioned partition plate 10.

The full width and full circumference of the porous plate 19 constituting the lower portion of the inner wall of the rotational drying chamber 13 is covered completely by a vessel 20. A hot air chamber 21 is formed between this vessel 20 and the porous plate 19. A heated gas inlet pipe 22 is connected to the side of this hot air chamber 21, and air purified by the aforementioned air filter 1 and heated by the aforementioned air heater 2 is supplied via this inlet pipe 22 by means of the ventilating action of the aforementioned supply blower 5, similarly to the hot air chamber 11 as illustrated in Fig. 1.

As depicted in Fig. 2, the heated gas inlet pipe 22 is connected to the side wall of the vessel 20 in an approximate tangential direction facing in the same rotational direction as the aforementioned whirling upward airflow created inside the vessel 4. This is desirable because, by connecting the inlet pipe 22 to the side wall of the vessel 20 from an approximate tangential direction facing the same rotational direction as the whirling upward airflow created inside the rotational drying chamber 13, the heated gas introduced via this inlet pipe 22 will flow in a specified direction inside the hot air chamber 21 (same rotational direction as the whirling upward airflow) and hence it will be injected evenly and smoothly from the openings 16 of the blowholes 14 into the rotational drying chamber 13.

A discharge pipe 23 is connected to the side wall in the upper portion of the drying vessel 4, in an approximately tangential direction oriented in the same rotational direction as the whirling upward airflow created inside the drying vessel 4. As illustrated in Fig. 1, this discharge pipe 23 is connected via a medium separator, such as a cyclone 7 and/or bag collector 8, or the like, and piping 24, to a discharge blower 25.

In Fig. 1, 26 denotes a supply pipe for the heating medium (steam, or the like), which supplies the heating medium to the aforementioned air heater 2. 27 denotes a temperature control device provided in the aforementioned supply pipe 26, which is constructed such that a valve 30 provided in the supply pipe 26 is opened and closed according to the temperature of the heating medium as detected by a temperature detector 29 provided along the course of the heating medium supply pipe 28.

Moreover, numeral 31 in Fig. 1 denotes a liquid material M supply nozzle which projects into the fluidization chamber 12 containing the aforementioned medium particles 6. This supply nozzle 31 supplies a continuous fixed quantity of the liquid material M to be dried, which is stored in the aforementioned raw material tank 3, to the layer of medium particles 6 in a fluidized state, by means of a fixed quantity supply pump 33 provided along the course of the supply pipe 32.

Since the medium particles 6 are in a state of vigorous fluid movement in the fluidization chamber 12, it to is usually sufficient to supply the liquid material M simply by titration into the fluidized layer of medium particles 6, rather than supplying a spray of the liquid material M. Therefore, the aforementioned supply nozzle 31 may be constituted by a simple tube, as illustrated in the drawing.

Moreover, the supply nozzle 31 may also be inserted into the layer of medium particles vertically from above the fluidization chamber 12, as illustrated in Fig. 1. Alternatively, it may be inserted into the layer of medium particles from the side of the fluidization chamber 12. Desirably, the supply nozzle 31 should be fixed in a location whereby the tip portion thereof lies inside the fluidized layer of medium particles during operation, but remains approximately 10 - 50 mm, for example, above the upper surface of the layer when the medium particles 6 are in a state of rest.

Numeral 34 in Fig. 1 denotes a water tank. The temperature of the exhaust gas is cooled by supplying water from this water tank 34. This serves to protect to the powder collecting apparatus (in particular, the bag collector 8) when air at a relatively high temperature is used as the heated gas at the start of operation.

35 and 36 denote rotary valves provided below the cyclone 7 and bag collector 8, respectively, and these serve to discharge the dried powder collected by the cyclone 7 and the bag collector 8, in a continuous fashion.

If the apparatus is small in size or it is not to be operated for long periods of time, then it is possible to dispense with the aforementioned rotary valves and instead connect to a product collection tank (not illustrated), via a switching valve, to the lower openings of the respective apparatus, 37 denotes a churning device for preventing precipitation of the solid component in the liquid material M inside the raw material tank 3, and maintaining a uniform concentration of the solid component in the liquid material M that is supplied to the drying vessel 4. 38 is a compressed air source, and 39 is a compressed air time control device for intermittently blowing off powder adhering to the outer surface of the bag filter 40 housed in the bag collector.

The drying apparatus relating to the present invention is constituted as described above. Representative materials which can be dried using this apparatus include, for example, organic slurries or solutions of starch, vinyl chloride, polyethylene or polypropylene resins, organic chemicals, or the like, inorganic slurries of titanium dioxide, lime, calcium carbonate, inorganic chemicals, or the like, or fine-grain metal slurries or iron oxide, lead oxide, zinc oxide, or the like. However, materials which can be dried by the aforementioned apparatus are not limited to those listed here, and include various types of organic materials, inorganic materials, and metallic liquid materials.

Furthermore, the medium particles 6 used in to the foregoing drying process for liquid materials are selected in terms of their shape and substance, on the basis of the properties of the liquid material to be processed, the operating temperature, frictional resistance, total packed weight, and the like. For example, with regard to the shape of the medium particles 6, spherical particles having a diameter of 0.5 - 5 mm are most desirable, and besides this, it is also possible to use particles of a similar dimensional range having an oval shape, square shape, rectangular shape, cylindrical shape, indefinite shape, or another shape suited to the process according to the present to invention, or a combination of particles of different shapes.

The substance used for the medium particles 6 may be an inorganic material, such as a ceramic of some kind, an organic material, such as rubber, teflon, nylon, or the like, a metal, such as stainless steel, carbon steel, alloy steel, or the like, or another material suited to the process according to the present invention. It is also possible to use particles made from a combination of these materials.

Next, a drying method for a liquid material M, using the apparatus relating to the present invention constituted as described above, will be explained.

Firstly, in a state where a prescribed quantity of medium particles 6 is previously introduced into the drying vessel 4, heated air which has passed through the air filter 1 and the air heater 2 is supplied via inlet pipes 18 and 22 to the hot air chambers 11 and 21, respectively.

The heated air supplied to hot air chamber 11 is blown up through the dispersion plate 9 to the fluidization chamber 12, thereby fluidizing the medium particles 6 inside the fluidization chamber 12, creating a fluidized layer of medium particles 6 and raising the temperature thereof. The heated air rising up through the fluidized layer of the medium particles 6 is emitted via the blowholes 14 of the partition plate 10 into the rotational drying chamber 13, thereby creating a whirling upward airflow.

The heated air supplied to the hot air chamber 21, on the other hand, is emitted via the blowholes 14 of the porous plate 19 into the rotational drying chamber 13, thereby creating an airflow rotating at to high-speed in a circumferential direction along the porous plate 19.

In both of the cases above, the heated air rises upwards whilst rotating along the walls of the rotational drying chamber 13, and then passes via the discharge pipe 23 through the powder separating devices 7, 8 and pipe 24, to the discharge blower 25 where it is expelled from the system. The respective quantity and ratio of heated air supplied to the hot air chambers 11 and 21 can be controlled by means of valves 41, 42 provided respectively along the course of the heated air inlet pipes 18 and 22, and a valve 43 provided along the source of pipe 24.

In this way, once the hot air temperature, the temperature of the medium particles 6 (temperature of the fluidization chamber 12), and the temperature in the rotational drying chamber 13 have all reached prescribed levels, and the whirling upward airflow induced by the heated air has stabilized, liquid material M to be dried contained in the raw material tank 3 is conveyed to the supply nozzle 31 forcibly at prescribed flow rate by operation of the fixed quantity supply pump 33.

The aforementioned liquid material M conveyed to the supply nozzle 31 is then forcibly discharged from the tip section of the nozzle into the fluidized layer of medium particles 6, where it is imparted with a vigorous turbulent motion and progressively adheres to the surfaces of the huge number of medium particles 6 held in a fluid state.

The liquid material M residing on the surfaces of the medium particles 6 is heated rapidly and efficiently by the heated air blown up from the hot air chamber 11, thereby receiving a drying action.

The supply volume (supply rate) of the liquid material M is adjusted in such a manner that the exhaust gas temperature remains at a set temperature.

The water, or other dispersion medium or solvent, in the liquid material M receiving the drying action on the respective surfaces of the medium particles 6 evaporates rapidly due to the aforementioned heating action. The solid component (powder) in the liquid material M receives a separating action due to collisions and friction between medium particles 6 in the fluidized layer and between the medium particles 6 and the inner walls of the fluidization chamber 12, and hence detaches from the surfaces of the medium particles 6.

The solid component (powder) of the liquid material M which detaches from the surfaces of the medium particles 6 does not form into granules, but rather floats upwards progressively from the fluidized layer of medium particles 6 into the space thereabove, continuously, said solid component (powder) having a particle size which is virtually the same as the particle size when the solid is suspended in a dispersion medium, in other words, the primary particle size. The solid component (powder) passes through the partition plate 10 in combination with the exhaust air, and is transferred to the rotational drying chamber 13 thereabove.

The powder having passed into the rotational drying chamber 13 is instantly and forcibly dispersed by the heated air rotating at high speed in a circumferential direction along the porous plate 19, and it joins the whirling upward airflow created by the heated air inside the rotational drying chamber 13.

Thereupon, the powder receives a centrifugal force from the whirling upward airflow and a vigorous rotational movement along the porous plate 19 is imparted to the powder. However, since heated air is also injected continuously from the porous plate 19, the powder is not compressed against the porous plate 19. Consequently, even if drying is insufficient immediately after transfer to the rotational drying chamber 13 and the powder is an a state where it is liable to adhere to the porous plate 19, it will not adhere and accumulate on the inner walls of the chamber. Moreover, even if the powder does come into contact with, and adhere to, the walls of the chamber, since heated air is emitted continuously from the blowholes 14 of the porous plate 19 in a parallel direction to the surface of the porous plate 19, it is possible for the powder to be blown off rapidly after adhering to the walls. Furthermore, since exhaust air is also emitted continuously from the partition plate 10 forming the lower wall of the rotational drying chamber 13, powder is also prevented from adhering to, and accumulating on, the surface of the partition plate 10 forming the lower wall of the rotational drying chamber.

Whilst the powder borne by the whirling upward airflow is moist and has high density, it receives a strong action due to gravity and a strong centrifugal force from the whirling upward airflow, and hence it to remains rotating within approximately the same horizontal plane, whilst receiving the drying effect of the thermal energy imparted by the heated air.

Thereupon, despite the fact to that to the openings 14 of the blowholes 14 in the porous plate 18 have a uniform surface area, shape, and opening ratio, and moreover, the blowholes 14 all emit uniform quantities of heated air, the flow rate of the whirling upward airflow in the vicinity of the porous plate 19 gradually accumulates in an upward direction, and becomes larger, the higher the position in the axial direction of the airflow. Consequently, an "air ring" is created in this section, and this air ring has an effect on the powder transferred to the rotational drying chamber 13 exactly similar to the effect obtained if a dividing ring having a circular opening in the centre thereof was installed on the side wall of the chamber. Thereby, the powder is caused to mix into the upward airflow and is prevented from travelling directly upwards.

Powder which was transferred to the rotational drying chamber 13 previously and has dried and become lighter receives a smaller effect due to gravity and less centrifugal force from the whirling upward airflow, and it moves towards the centre of the airflow, passes through the opening in the air ring caused by the whirling upward airflow as described above, and is then conveyed upwards inside the rotational drying chamber 13 whilst rotating and mixing with the rising airflow. This powder then mixes into the exhaust gas and is discharged via the discharge pipe 23 and transmitted to the cyclone 7 and bag collector 8, where it is separated from the exhaust gas, collected and collected in the form of a dry powder.

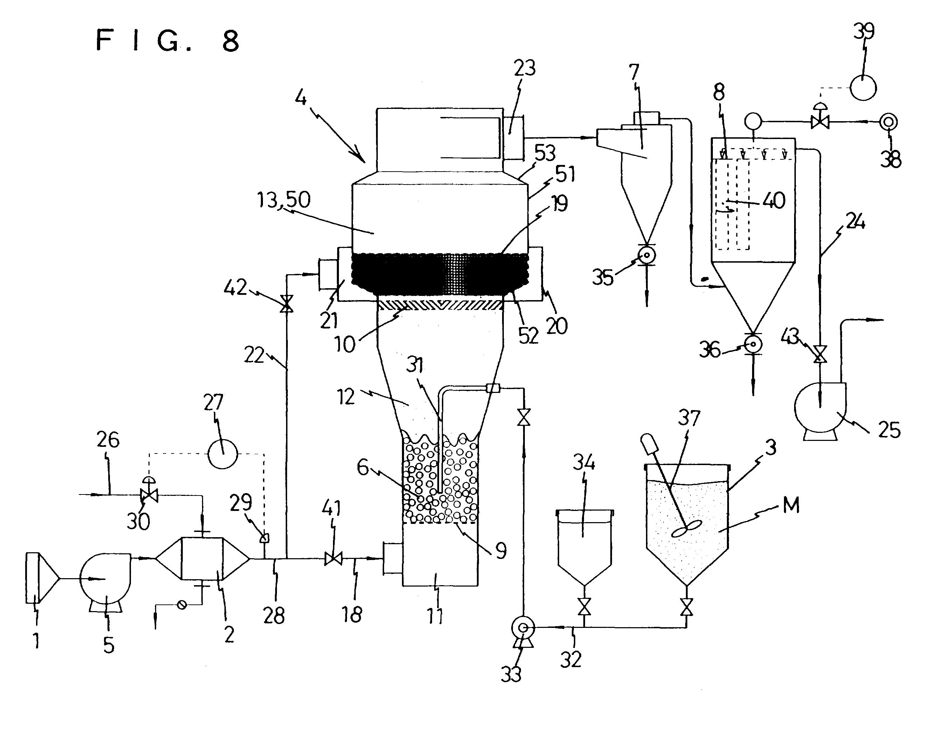

Next, a apparatus relating to a second embodiment of the present invention is described with reference to Fig. 8.

In this embodiment, members which are the same as members in the apparatus relating to the first embodiment of the present invention described above are given the same reference numerals, and description thereof is omitted.

The apparatus according to the second embodiment is a apparatus wherein a rotational drying chamber (hereinafter, called rotational drying chamber 50) having a horizontal cross -section in the shape of an enlarged concentric circle is formed in a portion of the rotational drying chamber 13 located about the aforementioned partition plate 10. The other portions of the apparatus are the same as the apparatus relating to the first embodiment of the present invention described above.

The enlarged rotational drying chamber 50 is constructed such that a tubular member 51 having a large internal diameter is connected to a portion of the drying vessel 4, as illustrated in the diagram, for instance, by means of truncated conical members 52 and 53.

In this apparatus, desirably, the aforementioned enlarged rotational drying chamber 50 should have a surface area ratio in the range of 1.1 - 3.0, and more desirably, in the range of 1.1 - 2. 0, with respect to the other rotational drying chamber 13.

This is because if the rotational drying chamber 50 has a surface area ratio of less than 1. 1, then it will have little effect in extending the residence time of the powder. Moreover, if the rotational drying chamber 50 has a surface area ratio in excess of 3, then depending on the airflow (flow rate) of the heated air supplied thereto, the speed of the whirling upward airflow in the whirling drying chamber 50 will be reduced severely, and it will not be possible to generate sufficient centrifugal force to impart a rotational movement to the powder, or to provide upward lift causing the powder to move upwards.

In the apparatus described above, the upward speed of the whirling upward airflow decreases sharply in the enlarged rotating drying chamber 50, such that the powder remains rotating in approximately the same horizontal plane. The powder remaining in this plane receives an efficient drying action from the thermal energy imparted by the heated air. When the powder has dried and become lighter, the centrifugal force acting on the powder from the whirling upward airflow reduces and the powder moves towards the centre of the chamber, mixes into the rotating and rising airflow, and is discharged via the discharge pipe 23. The powder emitted via the discharge pipe 23 is separated from the airflow by the powder separating devices 7 and/or 8, and is then collected as a satisfactorily dried powder.

In some cases, various types of organic solvent are used as the dispersion medium or solvent in the liquid material to be dried, and in some cases, according to the substance or particle side of the solid component, various types of inert gas, such as nitrogen gas, are used instead of air, in order to prevent fire and explosion. In such cases, a closed circuit is formed, for instance, by coupling the outlet pipe from the discharge blower 25 to an air heater 2, via a solvent recovery device, or the like, (not illustrated), apparatus operation being started once the atmosphere inside this circuit has been replaced by nitrogen gas, or the like.

### (Practical Examples)

Practical examples are described as shown below, along with comparative examples, in order to substantiate the advantages of the liquid material drying method and liquid material drying apparatus according to the present invention.

### (Practical Examples and Comparative Examples)

Apatite hydroxide slurry having 90%WB water content (average particle size : 3.5µm) was dried.

### (Practical example 1)

The aforementioned liquid material was dried using the drying apparatus illustrated in Fig. 1 (inner diameter of fluidization chamber in drying vessel : 200 mm; inner diameter of rotational drying chamber : 350 mm; medium particles : 8 kg of 3 mm-diameter zirconia particles).

The ratio of the heated air volumes supplied to the drying vessel respectively via the lower hot air chamber and the porous plate provided on the sidewalls of the vessel was 10:1. Other drying conditions and drying results are shown in Table 1 under practical example 1.

### (Practical example 2)

The aforementioned liquid material was dried using the drying apparatus illustrated in Fig. 8 (inner diameter of fluidization chamber in drying vessel : 200 mm; inner diameter of rotational drying chamber : 350 mm; inner diameter of the enlarged rotational drying chamber : 430 mm; length : 350 mm; medium particles : 8 kg of 3 mm-diameter zirconia particles). The ratio of the heated air volumes supplied to the drying vessel respectively via the lower hot air chamber and the porous plate provided on the sidewalls of the vessel was 10:1. Other drying conditions and drying results are shown in Table 1 under practical example 2.

### (Comparative example)

The aforementioned liquid material was dried using the drying apparatus illustrated in Fig. 1, wherein the partition plate 10 had been removed, the valve 42 provided in the inlet pipe 22 for supplying heated air to the hot air chamber 21 provided in the side wall was closed, and the porous plate 19 was covered by a non-porous plate (inner diameter of fluidization chamber in drying vessel : 200 mm; inner diameter of rotational drying chamber : 350 mm; medium particles : 8 kg of 3 mm-diameter zirconia particles).

Other drying conditions and drying results are shown in Table 1 under comparative example.

**(Table 1)**

| | Slurry supply rate (kg/hr) | Heated air | | | | | Water content of product (%WB) |
|---|---|---|---|---|---|---|---|
| | | Air column speed (m/sec) | Flow rate (m³/min) | Mass (kg/hr) | Input temperature (°C) | Output temperature (°C) | |
| Practical example 1 | 16 | 5.5 | 11.3 | 447 | 250 | 168 | 4.2 |
| Practical example 2 | 16 | 5.5 | 11.3 | 447 | 250 | 165 | 2.0 |
| Comparative example | 16 | 5.5 | 10.3 | 406 | 250 | | 5.3 |

According to the liquid material drying method and liquid material drying apparatus relating to the present invention as described above, it is possible to cause the solid component in the liquid material having detached from the medium particles to remain rotating within the same drying vessel, dramatically improving the frequency of contact of the solid component with new heated air, and therefore, the powder can be dried to a greater degree than by using a conventional liquid material drying method and liquid material drying apparatus.

Moreover, according to the liquid material drying method and liquid material drying apparatus relating to the present invention, by altering the flow rate, and the like, of the whirling upward airflow of heated gas created inside the drying vessel, it is also possible readily to control the water content of the collected powder by means of a single drying apparatus.

Consequently, the liquid material drying method and the liquid material drying apparatus relating to the present invention have merits in that subsequent drying equipment can be omitted, thereby reducing the size of the apparatus and making power savings.

## Claims

1. A liquid material drying method whereby a large amount of medium particles are placed on a dispersion plate inside a drying vessel, the medium particles are fluidized by means of heated gas blown up through said dispersion plate, and supplied liquid material is dried by being caused to adhere to the surfaces of the medium particles, the solid component contained in the liquid material being collected continuously in the form of powder,
characterized in that a whirling upward airflow caused by the heated gas is formed, at the least, in the region of the drying vessel above the fluidized layer of medium particles, the solid component in the liquid material having detached from the surfaces of the aforementioned medium particles being caused to disperse, float and dry further in this whirling upward airflow.

2. The liquid material drying method according to claim 1, characterized in that said whirling upward airflow is created inside the drying vessel by means of fresh heated air being injected into the drying vessel in a fixed direction to the tangential direction of the sidewalls of the vessel, from the whole circumference of the side wall of said drying vessel in the region above the fluidized layer of medium particles.

3. The liquid material drying method according to claim 1, characterized in that said whirling upward airflow is created inside the drying vessel by means of fresh heated air being injected into the drying vessel in a fixed direction to the tangential direction of the sidewalls of the vessel, from the whole circumference of the side wall of said drying vessel in the region above the fluidized layer of medium particles, and by means of exhaust gas rising up through the fluidized layer of medium particles being injected in a similar direction to the rotational direction of the whirling upward airflow formed inside the drying vessel by the injection of said fresh heated gas, from a dividing plate provided in a position above the fluidized layer of medium particles and below the side wall region where said fresh heated gas is injected.

4. A drying apparatus comprising a drying vessel divided by a dispersion plate into a hot to air chamber and a fluidization chamber, a heated gas inlet pipe connected to the hot air chamber of the drying vessel, a large amount of medium particles contained in the fluidization chamber of said drying vessel, and a liquid material supply pipe for supplying liquid material to be dried to the fluidization chamber containing said medium particles,
characterized in that a rotating mechanism for creating a whirling upward airflow of the heated gas inside the drying vessel is provided, at the least, above the fluidized layer of medium particles in the aforementioned drying vessel.

5. The liquid material drying apparatus according to claim 4, characterized in that to said rotating mechanism for creating a whirling upward airflow of heated gas inside the drying vessel is constituted by forming the whole circumference of the side wall of the drying vessel in the region above said fluidized layer of medium particles by means of a porous plate, wherein a plurality of blowholes are formed in an arrangement such that the openings thereof face in one tangential direction of the sidewalls, the region of said porous plate being covered by a vessel, and a heated gas inlet pipe being connected to this vessel also.

6. The liquid material drying apparatus according to claim 4, characterized in that said rotating mechanism for creating a whirling upward airflow of heated gas inside the drying vessel is constituted by forming the whole circumference of the side wall of the drying vessel in the region above said fluidized layer of medium particles by means of a porous plate, wherein a plurality of blowholes are formed in an arrangement such that the openings thereof face in one tangential direction of the sidewalls, the region of said porous plate being covered by a vessel, and a heated gas inlet to pipe being connected to this vessel also, and by providing a dividing plate inside the drying vessel in a position above the fluidized layer of medium particles and below said porous plate, a plurality of blowholes being formed in said dividing plate in such a manner that the openings thereof face in the same direction as the rotational direction of the whirling upward airflow created inside the drying vessel by said porous plate.
